**Europäisches Patentamt**

**European Patent Office**

**Office européen des brevets**

(19)

(11) Veröffentlichungsnummer: **0 318 715**
**B1**

(12) **EUROPÄISCHE PATENTSCHRIFT**

(45) Veröffentlichungstag der Patentschrift: **23.01.91**

(51) Int. Cl.⁵: **F 16 L 19/04**

(21) Anmeldenummer: **88118296.8**

(22) Anmeldetag: **03.11.88**

(54) Rohrverbindung.

(30) Priorität: **30.11.87 DE 3740585**
**09.06.88 DE 3819729**

(43) Veröffentlichungstag der Anmeldung:
**07.06.89 Patentblatt 89/23**

(45) Bekanntmachung des Hinweises auf die
Patenterteilung:
**23.01.91 Patentblatt 91/04**

(84) Benannte Vertragsstaaten:
**AT BE CH DE ES FR GB GR IT LI LU NL SE**

(56) Entgegenhaltungen:
**FR-A-2 118 222**
**GB-A- 244 253**
**US-A-1 821 863**

(73) Patentinhaber: **Nock, Ernst**
**Kraftwerkstrasse 40**
**D-7889 Grenzbach-Wyhlen 2 (DE)**

(72) Erfinder: **Nock, Ernst**
**Kraftwerkstrasse 40**
**D-7889 Grenzbach-Wyhlen 2 (DE)**

(74) Vertreter: **Tetzner, Volkmar, Dr.-Ing. Dr. jur.**
**Van-Gogh-Strasse 3**
**D-8000 München 71 (DE)**

Courier Press, Leamington Spa, England.

**Beschreibung**

Die Erfindung betrifft eine Rohrverbindung entsprechend dem Oberbegriff des Anspruches 1.

Eine Rohrverbindung gemäß dem Oberbegriff des Anspruches 1 ist durch die FR-A-2 118 222 bekannt. Der Zwischenring ist hierbei in radialer Richtung verbreitert und stützt sich mit seinem äußeren Bereich an den axialen Enden der Rohre ab.

Der Erfindung liegt die Aufgabe zugrunde, eine Rohrverbindung entsprechend dem Oberbegriff des Anspruches 1 so auszubilden, daß der Zwischenring durch die Spannkraft der Spannmittel nicht nach innen gedrückt wird.

Diese Aufgabe wird erfindungsgemäß durch das kennzeichnende Merkmal des Anspruches 1 gelöst. Zweckmäßige Ausgestaltungen der Erfindung sind Gegenstand der Unteransprüche.

Indem sich der Zwischenring mit seinem in axialer Richtung verbreiterten äußeren Bereich an den ursprünglichen Stirnseiten der nun konisch aufgeweiteten Rohrenden abstützt, wird erreicht, daß der Zwischenring durch die Spannkraft der Spannmittel nicht nach innen gedrückt wird. Eine derartige Abstützung ist vor allem für Rohre großen Durchmessers von besonderem Vorteil.

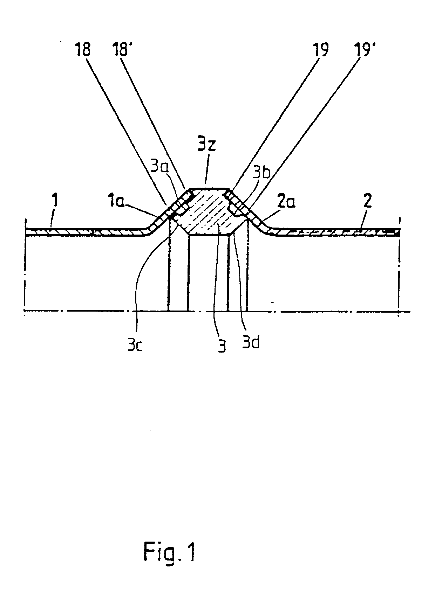

Einige Ausführungsbeispiele der Erfindung sind in den Fig. 1 bis 6 der Zeichnung veranschaulicht.

Zwischen die miteinander zu verbindenden Rohre 1 und 2 (Fig. 1) ist ein koaxial angeordneter Zwischenring 3 eingefügt, dessen Außendurchmesser etwas größer als der Außendurchmesser der Rohre 1 und 2 ist.

Der äußere Teil 3a bzw. 3b der beiden Stirnseiten des Zwischenringes 3 ist nach außen zu konisch abgeschrägt.

In entsprechender Weise ist der innere Teil 3c bzw. 3d der beiden Stirnseiten nach innen zu konisch abgeschrägt.

An den äußeren Teilen 3a bzw. 3b der Stirnseiten des Zwischenringes 3 sind je zwei Dichtlippen 18, 18' bzw. 19, 19' vorgesehen, die ringförmige Dichtflächen bilden.

Im äußeren Bereich 3z ist der Zwischenring 3 in axialer Richtung verbreitert und stützt sich mit diesem verbreiterten Bereich 3z an den ursprünglichen Stirnseiten der nun konisch aufgeweiteten Rohrenden 1a, 2a ab.

Durch diese Abstützung wird erreicht, daß der Zwischenring 3 durch die (in Fig. 1 nicht dargestellt) Spannmittel nicht nach innen gedrückt wird, wenn die Rohrenden 1a, 2a und der Zwischenring 3 in Achsrichtung der Rohre durch die Spannmittel kraftschlüssig verspannt werden, wobei sich durch die plastische Verformung der Dichtflächen des Zwischenringes und/oder der mit den Dichtflächen in Berührung stehenden Flächen der Rohrenden eine dichte Verbindung der Rohrenden ergibt.

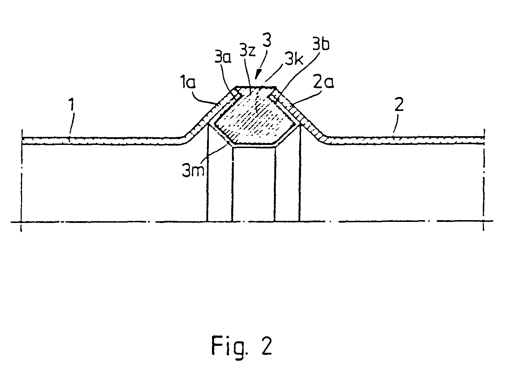

Während bei dem Ausführungsbeispiel gemäß Fig. 1 die Dichtflächen durch ringförmige Dichtlippen gebildet werden, zeigt Fig. 2 eine Variante, bei der der Zwischenring 3 einen Kern 3k aus einem Material hoher Festigkeit und eine die Dichtflächen bildende, leicht verformbare Oberflächenschicht 3m enthält. Diese verformbare Oberflächenschicht übernimmt hierbei anstelle der ringförmigen Dichtlippen die Abdichtung, wenn die Rohrenden 1a, 2a und der Zwischenring 3 durch die (in Fig. 2 nicht veranschaulichten) Spannmittel zusammengespannt werden. Der feste Kern 3k des Zwischenringes 3 nimmt die bei einer kraftschlüssigen Verbindung auftretenden Kräfte auf.

Auch bei diesem Ausführungsbeispiel der Erfindung (ebenso wie bei den im folgenden beschriebenen weiteren Ausführungsformen) stützt sich der in axialer Richtung verbreiterte äußere Bereich 3z des Zwischenringes 3 an den Stirnseiten der konisch aufgeweiteten Rohrenden 1a, 2a ab.

Der Zwischenring kann ferner aus einem Material herge stellt werden, dessen Härte größer als die Härte des Rohrwerkstoffes ist. In diesem Falle tritt beim kraftschlüssigen Verspannen der Rohrenden und des Zwischenringes eine plastische Verformung der mit den Dichtflächen des Zwischenringes in Berührung stehenden Flächen der Rohrenden ein. Die Abdichtung wird somit durch die Verformung der an den Dichtflächen bzw. Dichtlippen des Zwischenringes anliegenden, aufgeweiteten Rohrwandung erreicht.

Die Aufweitung der Rohrenden 1a, 2a beträgt zweckmäßig das 1,1- bis 1,5-fache, vorzugsweise das 1,2- bis 1,5-fache des Rohrinnendurchmessers.

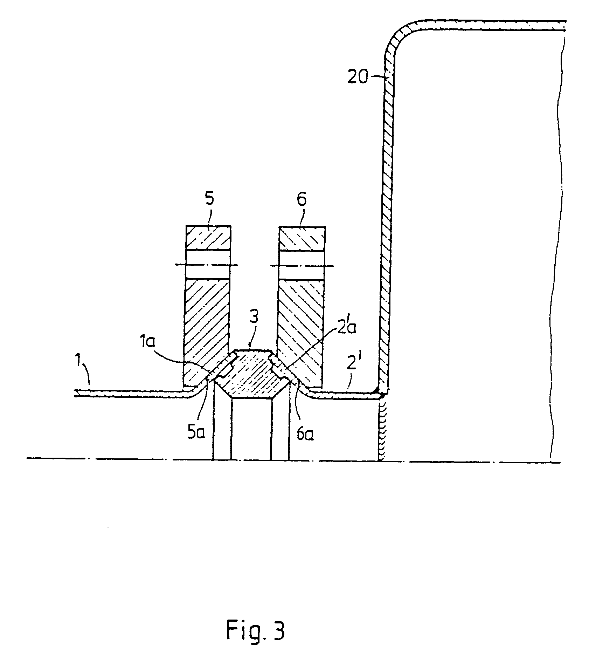

Die Fig. 3 bis 6 zeigen einige Ausführungsbeispiele für die Anwendung der erfindungsgemäßen Rohrverbindung zum Anschluß von Armaturen und Maschinen. Das eine der beiden miteinander zu verbindenden Rohre wird hierbei durch einen an der Armatur bzw. Maschine vorgesehenen Stutzen gebildet, der einen dem Zwischenring angepaßten Konus aufweist.

Bei dem Ausführungsbeispiel gemäß Fig. 3 ist am Maschinengehäuse 20 ein Stutzen 2' angeschweißt, dessen Ende 2'a konisch aufgeweitet ist und mit dem Ende 1a des Rohres 1 über den Zwischenring 3 so verbunden wird, wie dies anhand der Fig. 1 bereits erläutert wurde. Als Spannmittel dienen in axialer Richtung verspannbare Flansche 5, 6, deren Bohrungsdurchmesser etwa dem Außendurchmesser des Rohres 1 bzw. des Stutzens 2' entspricht.

Die Bohrung der Spannmittel (Flansche 5, 6) geht dabei auf der dem Zwischenring 3 zugewandten Seite in eine sich zur benachbarten Stirnseite hin erweiternde Konusfläche 5a, 6a über, deren Konuswinkel dem der Konusfläche des aufgeweiteten Rohrendes 1a bzw. des konisch aufgeweiteten Endes 2'a des Stutzens 2' entspricht.

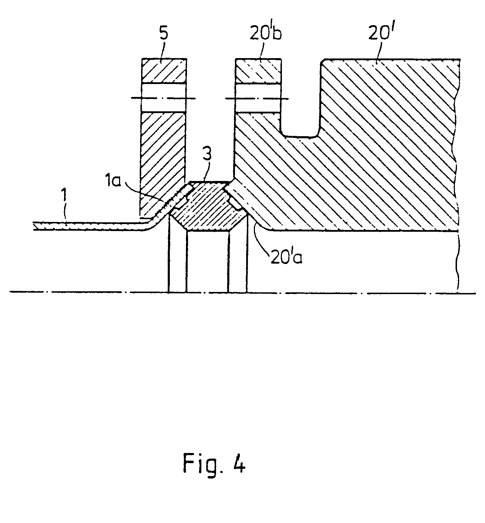

In Abwandlung des Ausführungsbeispieles gemäß Fig. 3 ist bei der in Fig. 4 dargestellten Variante das Maschinengehäuse 20' mit einem angeformten Konus 20'a und einem gleichfalls angeformten Flansch 20'b versehen. Der Zwischenring 3 besitzt die anhand von Fig. 1 erläuterte Form. Mittels der Flansche 5, 20'b werden das Rohrende 1a, der Zwischenring 3 und der Konus 20'a unter plastischer Verformung der Dichtlippen des Zwischenringes 3 miteinander verspannt.

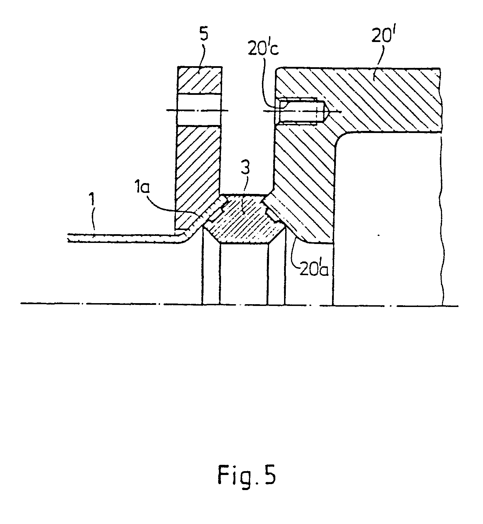

Das Ausführungsbeispiel gemäß Fig. 5 ähnelt Fig. 4. Das Maschinengehäuse 20' enthält einen angeformten Konus 20'a zur Anlage des Zwischenringes 3 sowie Gewindebohrungen 20'c zur Aufnahme von (nicht dargestellten) Spannschrauben, über die der Flansch 5 unter plastischer Verformung der Dichtlippen des Zwischenringes 3 an das Maschinengehäuse 20' herangezogen wird.

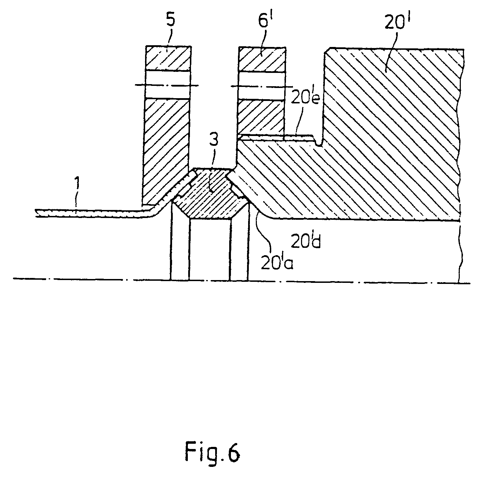

Bei dem in Fig. 6 veranschaulichten Ausführungsbeispiel ist das Maschinengehäuse 20' mit einem angeformten Stutzen 20'd versehen, der einen Konus 20'a zur Anlage des Zwischenringes 3 aufweist und der auf seiner äußeren Mantelseite ein Gewinde 20'e besitzt, das zur Aufnahme eines mit Innengewinde versehenen Flansches 6' dient. Bei diesem Ausführungsbeispiel kann das Herstellen und Lösen der Verbindung durch eine gemeinsame Drehbewegung der (über Spannmittel miteinander verbundenen) Flansche 5, 6' um die Rohrachse erfolgen, ohne daß sich hierbei die Relativlage der Flansche 5, 6' zueinander ändert.

## Patentansprüche

1. Rohrverbindung, insbesondere dichtungslose Hochdruckrohrverbindung, bei der

a) zwischen die miteinander zu verbindenden Rohre (1, 2) ein koaxial angeordneter Zwischenring (3) eingefügt ist, dessen Außendurchmesser etwas größer als der Außendurchmesser der Rohre ist,

b) an den beiden Stirnseiten des Zwischenringes (3) wenigstens je eine ringförmige Dichtfläche vorgesehen ist,

c) die dem Zwischenring zugewandten Enden (1a, 2a) der miteinander zu verbindenden Rohre (1, 2) einen vergrößerten Durchmesser besitzen

d) und Spannmittel vorgesehen sind, durch die die Rohrenden (1a, 2a) und der Zwischenring (3) in Achsrichtung der Rohre kraftschlüssig verspannt und durch plastische Verformung der Dichtflächen des Zwischenringes und/oder der mit den Dichtflächen in Berührung stehenden Flächen der Rohrenden dicht miteinander verbunden sind, gekennzeichnet durch folgendes Merkmal:

e) der Zwischenring (3) ist im äußeren Bereich (3z) in axialer Richtung verbreitert und stützt sich mit diesem verbreiterten Bereich an den ursprünglichen Stirnseiten der nun konisch aufgeweiteten Rohrenden (1a, 2a) ab.

2. Rohrverbindung nach Anspruch 1, dadurch gekennzeichnet, daß wenigstens ein Teil (3a, 3b) der Stirnseiten des Zwischenringes (3) nach außen zu konisch abgeschrägt ist.

3. Rohrverbindung nach Anspruch 1, dadurch gekennzeichnet, daß im Bereich der beiden Stirnseiten des Zwischenringes jeweils mehrere als Dichtlippen ausgebildete ringförmige Dichtflächen mit gegenseitigem Abstand angeordnet sind.

4. Rohrverbindung nach den Ansprüchen 1 und 2, dadurch gekennzeichnet, daß die beiden Stirnseiten des Zwischenringes (3) nach innen und außen konisch abgeschrägt sind, wobei als Dichtlippen ausgebildete ringförmige Dichtflächen (18, 19) am Übergang zwischen den beiden Konusflächen vorgesehen sind.

5. Rohrverbindung nach Anspruch 1, dadurch gekennzeichnet, daß die Aufweitung der Rohrenden (1a, 2a) das 1,1- bis 1,5-fache, vorzugsweise das 1,2- bis 1,5- fache des Rohrinnendurchmessers beträgt.

6. Rohrverbindung nach Anspruch 1, dadurch gekennzeichnet, daß die Spannmittel zwei über Verbindungselemente, wie Schrauben oder Nieten (7), in axialer Richtung verspannbare Flansche (5, 6) enthalten, deren Bohrungsdurchmesser etwa dem Außendurchmesser der Rohre (1, 2) entspricht.

7. Rohrverbindung nach den Ansprüchen 1 und 6, dadurch gekennzeichnet, daß die Bohrung der Spannmittel auf dem dem Zwischenring (3) zugewandten Seite in eine sich zur benachbarten Stirnseite hin erweiternde Konusfläche (5a, 6a) übergeht, deren Konuswinkel dem der Konusfläche der aufgeweiteten Rohrenden entspricht.

8. Rohrverbindung nach Anspruch 1, dadurch gekennzeichnet, daß der Zwischenring einen Kern aus einem Material hoher Festigkeit und eine die Dichtfläche bildende, leicht verformbare Oberflächenschicht enthält.

9. Rohrverbindung nach Anspruch 1, dadurch gekennzeichnet, daß der Zwischenring aus einem Material besteht, dessen Härte größer als die Härte des Rohrwerkstoffes ist.

10. Rohrverbindung nach Anspruch 1 in Form eines Rohranschlusses für Armaturen oder Maschinen, dadurch gekennzeichnet, daß das eine der miteinander zu verbindenden Rohre durch einen an der Armatur bzw. Maschine vorgesehenen Stutzen (z.B. 2', 20'd) mit einem dem Zwischenring (3) angepaßten Konus (z.B. 2'a, 20'a) gebildet wird.

11. Rohrverbindung nach Anspruch 11, dadurch gekennzeichnet, daß der Stutzen (20'd) mit einem Außengewinde (20e) versehen ist, auf dem ein mit Innengewinde versehener, als Spannmittel dienender Flansch (6') in Achsrichtung verstellbar ist.

## Revendications

1. Raccord de tuyaux, en particulier raccord sans garniture d'étanchéité pour tuyaux sous haute pression, dans lequel:

a) une bague intermédiaire (3), disposée coaxialement et dont le diamètre extérieur est légèrement supérieur à celui des tuyaux (1, 2) devant être reliés l'un à l'autre, est insérée entre ces derniers,

b) au moins une surface annulaire d'étanchéité est prévue sur chacun des deux côtés extrêmes de la bague intermédiaire (3),

c) l'extrémité (1a, 2a), tournée vers la bague intermédiaire, de chacun des tuyaux (1, 2) devant être reliés l'un à l'autre présente un diamètre agrandi,

d) et des organes de serrage qui sont prévus mettent sous traction avec contrainte les unes contre les autres, dans la direction de l'axe des tuyaux, l'extrémité (1a, 2a) de chacun de ceux-ci et la bague intermédiaire (3) et les relient de manière étanche les unes aux autres par déformation plastique des surfaces d'étanchéité de la bague intermédiaire et/ou des surfaces de l'extrémité des tuyaux qui sont en contact avec ces surfaces d'étanchéité,

caractérisé par la particularité suivante:

e) la partie extérieure (3z) de la bague intermédiaire (3) comporte un élargissement dans la direction de l'axe et prend appui par cette partie élargie contre le côté initial extrême de l'extrémité (1a, 2a) de chacun des tuyaux qui présentent alors un élargissement conique.

2. Raccord de tuyaux selon la revendication 1, caractérisé en ce qu'au moins une partie (3a, 3b) des côtés extrêmes de la bague intermédiaire (3) comporte un chanfrein conique vers l'extérieur.

3. Raccord de tuyaux selon la revendication 1, caractérisé en ce que plusieurs surfaces annulaires conformées en lèvres d'étanchéité et placées à distance les unes des autres sont réalisées sur chacun des deux côtés extrêmes de la bague intermédiaire.

4. Raccord de tuyaux selon les revendications 1 et 2, caractérisé en ce que les deux côtés extrêmes de la bague intermédiaire (3) sont chanfreinés en cône vers l'intérieur et l'extérieur, les surfaces annulaires (18, 19) conformées en lèvres d'étanchéité étant prévues à la transition entre les deux surfaces coniques.

5. Raccord de tuyaux selon la revendication 1, caractérisé en ce que l'élargissement de l'extrémité (1a, 2a) de chacun des tuyaux est compris entre 1,1 et 1,5 fois, de préférence 1,2 et 1,5 fois le diamètre interne de ces tuyaux.

6. Raccord de tuyaux selon la revendication 1, caractérisé en ce que les organes de serrage comprennent deux brides (5, 6) qui sont destinées à être mises sous traction l'une vers l'autre dans la direction de l'axe au moyen d'éléments de liaison tels que des vis ou des rivets (7) et dont le diamètre du trou correspond approximativement au diamètre extérieur des tuyaux (1, 2).

7. Raccord de tuyaux selon les revendications 1 et 6, caractérisé en ce que le trou des organes de serrage s'infléchit du côté tourné vers la bague intermédiaire (3) en une surface conique (5a, 6a) s'élargissant vers le côté latéral voisin et dont l'angle au sommet du cône correspond à celui de la surface conique de l'extrémité élargie des tuyaux.

8. Raccord de tuyaux selon la revendication 1, caractérisé en ce que la bague intermédiaire comprend un noyau en un matériau à grande résistance et une couche superficielle légèrement déformable et formant la surface d'étanchéité.

9. Raccord de tuyaux selon la revendication 1, caractérisé en ce que la bague intermédiaire est en un matériau dont la dureté est supérieure à celle de la matière des tuyaux.

10. Raccord de tuyaux selon la revendication 1 sous forme d'un assemblage de tuyau pour robinetteries ou machines, caractérisé en ce que l'un des tuyaux devant être relié à l'autre est formé d'une tubulure (par exemple 2', 20'd) prévue sur la robinetterie ou la machine et présentant un cône (par exemple 2'a, 20'a) conforme à celui de la bague intermédiaire (3).

11. Raccord de tuyaux selon la revendication 10, caractérisé en ce que la tubulure (20'd) comporte un filetage (20e) sur lequel une bride (6') servant d'organe de serrage et comportant un taraudage est déplaçable dans la direction de l'axe.

## Claims

1. Pipe connection, especially a high-pressure pipe connection without seals, in which:

a) an intermediate ring (3) which is arranged coaxially and has an external diameter somewhat greater than the external diameter of the pipes is inserted between the pipes (1, 2) which are to be connected to one another,

b) at least one annular sealing surface is provided on each of the two end faces of the intermediate ring (3),

c) the ends (1a, 2a) facing the intermediate ring (3) of the pipes (1, 2) which are to be connected to one another have an enlarged diameter,

d) and clamping means are provided by means of which the pipe ends (1a, 2a) and the intermediate ring (3) are braced in a force-locking manner in the axial direction of the pipes and by plastic deformation of the sealing surfaces of the intermediate ring and/or the surfaces of the pipe ends coming into contact with the sealing surfaces are connected to one another and sealed,

characterised by the following feature:

e) the intermediate ring (3) is widened in the outer region (3z) in the axial direction and is supported with this widened region on the original end faces of the pipe ends (1a, 2a) which are now widened conically.

2. Pipe connection as claimed in claim 1, characterised in that at least one part (3a, 3b) of the end faces of the intermediate ring (3) is tapered conically towards the exterior.

3. Pipe connection as claimed in claim 1, characterised in that in the region of each of the two end faces of the intermediate ring a plurality of annular sealing surfaces constructed as sealing lips are arranged with reciprocal spacing.

4. Pipe connection as claimed in claims 1 and 2, characterised in that the two end faces of the intermediate ring (3) are tapered conically towards the interior and the exterior, and annular sealing surfaces (18, 19) constructed as sealing lips are provided at the transition between the two conical surfaces.

5. Pipe connection as claimed in claim 1, characterised in that the widening of the pipe ends (1a, 2a) is 1.1 to 1.5 times, preferably 1.2 to 1.5 times the internal diameter of the pipes.

6. Pipe connection as claimed in claim 1, characterised in that the clamping means comprise two flanges (5, 6) which can be braced by means of connecting elements such as screws or rivets (7) in the axial direction and have a bore diameter approximately corresponding to the external diameter of the pipes (1, 2).

7. Pipe connection as claimed in claims 1 and 6, characterised in that the bore of the clamping means on the side facing the intermediate ring (3) changes into a conical surface (5a, 6a) which widens towards the adjacent end face and has a cone angle corresponding to the conical surface of the widened pipe ends.

8. Pipe connection as claimed in claim 1, characterised in that the intermediate ring has a core made from a material with high strength values and an easily deformable surface layer which forms the sealing surface.

9. Pipe connection as claimed in claim 1, characterised in that the intermediate ring (3) is made from a material the hardness of which is greater than the hardness of the pipe material.

10. Pipe connection as claimed in claim 1 in the form of a pipe joint for fittings or machines, characterised in that one of the pipes to be connected to one another is formed by a stub (e.g. 2', 20'd) which is provided on the fitting or machine and has a cone (e.g. 2'a, 20'a) adapted to the intermediate ring (3).

11. Pipe connection as claimed in claim 10, characterised in that the stub (20'd) is provided with an external thread (20e) on which a flange (6') which is provided with an internal thread and serves as clamping means can be moved in the axial direction.

Fig.1

**Fig. 2**

Fig. 3

Fig. 4

4

Fig. 5

Fig.6